# EUROPEAN PATENT APPLICATION

(11) **EP 4 716 060 A1**
(43) Date of publication of application: **25.03.2026**
(21) Application number: 25197137.0
(22) Date of filing: 20.08.2025
(51) Int. Cl.: H02J 7/70, H02J 50/00, H02J 50/10

(54) **SELF-CHARGING BATTERY AND A METHOD THEREOF**

(30) Priority: 23.09.2024 IN 202411071699
(71) Applicant: Hand Held Products, Inc., Charlotte, NC 28202 (US)
(72) Inventor: SKVORETZ, Matthew Alexander, Charlotte, 28202 (US); KAPOOR, Ujjwal, Charlotte, 28202 (US)
(74) Representative: Haseltine Lake Kempner LLP

(57) **Abstract**

A self-charging battery is disclosed. The self-charging battery comprising a battery charging module configured to manage charging of the self-charging battery and at least one processor coupled to the battery charging module. Further, the at least one processor is adapted to determine whether a mobile terminal has a wireless charging capability, and configured to disable or enable the battery charging module based on the determination of whether the mobile terminal has the wireless charging capability.

## Description

### TECHNOLOGICAL FIELD

Example embodiments of the present disclosure relate generally to a battery, and more particularly, to a self-charging battery and a method thereof.

### BACKGROUND

Batteries used in mobile terminals for industrial environments are designed to withstand harsh conditions including extreme temperatures, moisture, dust, and physical impacts. The batteries typically are composed of materials like lithium-ion (Li-ion) or nickel-metal hydride (NiMH) to ensure long-lasting performance and reliability. Such materials often feature high energy density, rapid charging capabilities, and enhanced safety mechanisms to prevent overheating and short-circuiting. Despite their durability and efficiency, these batteries suffer from one or more limitations such as their general lack of support for wireless charging etc. Additionally, the high cost of these specialized batteries and their limited lifespan under continuous heavy usage can pose challenges for maintenance and operational budgets.

The inventors identified numerous deficiencies and problems in existing technologies and processes, which are the subjects of embodiments described herein. Through applied effort, ingenuity, and innovation, many of these deficiencies and problems have been solved by developing solutions that are included in embodiments of the present disclosure, many examples of which are described in detail herein.

### BRIEF SUMMARY

The following presents a summary of some example embodiments to provide a basic understanding of some aspects of the present disclosure. This summary is not an extensive overview and is intended to neither identify key or critical elements nor delineate the scope of such elements. It will also be appreciated that the scope of the disclosure encompasses many potential embodiments in addition to those here summarized, some of which will be further described in the detailed description that is presented later.

In an example embodiment, a self-charging battery is disclosed. The self-charging battery comprising a battery charging module configured to manage charging of the self-charging battery, and at least one processor coupled to the battery charging module. Further, the at least one processor is adapted to determine whether a mobile terminal has a wireless charging capability, and configured to disable or enable the battery charging module based on the determination of whether the mobile terminal has wireless charging capability.

In some embodiments, the self-charging battery further comprises a plurality of connecting pins coupled to the battery charging module and adapted to selectively connect the self-charging battery with the mobile terminal, the plurality of connecting pins comprising at least a battery wireless power (BWP) pin.

In some embodiments, the at least one processor determines whether the mobile terminal has the wireless charging capability by determining whether a mobile terminal wireless power (MTWP) pin is present within the mobile terminal and connected to the BWP pin or a signal received from the mobile terminal is indicative of the wireless charging capability of the mobile terminal. In some embodiments, the at least one processor is configured to disable the battery charging module upon determining the MTWP pin is present within the mobile terminal or the signal received from the mobile terminal is indicative of the wireless charging capability of the mobile terminal, or to enable the battery charging module upon determining the MTWP pin is not present within the mobile terminal or the signal received from the mobile terminal is not indicative of the wireless charging capability of the mobile terminal.

In some embodiments, the self-charging battery further comprises a charge coil and a charge receiver, and further the charge coil and the charge receiver are connected with the battery charging module to wirelessly charge the self-charging battery.

In some embodiments, upon disabling the battery charging module, the at least one processor is adapted to send a signal to the mobile terminal to enable a battery charging module of the mobile terminal to wirelessly charge the self-charging battery.

In some embodiments, the plurality of connecting pins further comprise a power pin, a communication clock pin, a communication data pin, a temperature pin, and/or a ground pin. In some embodiments, the temperature pin is configured to communicate a temperature of the self-charging battery and adapted to determine a connection of the self-charging battery with the mobile terminal.

In some embodiments, the signal corresponds to a command signal for disabling or enabling the battery charging module.

In some embodiments, the mobile terminal comprises at least one of a mobile device, a communication device, or a handheld computer.

In another example embodiment, a method is disclosed. The method comprises determining, via at least one processor coupled to a battery charging module of a self-charging battery, whether a mobile terminal has a wireless charging capability, and the method further comprises disabling or enabling, via the at least one processor, a battery charging module, based on the determination of whether the mobile terminal has wireless charging capability. Further, the battery charging module is configured to manage charging of the self-charging battery.

The above summary is provided merely for purposes of summarizing some exemplary embodiments to provide a basic understanding of some aspects of the disclosure. Accordingly, it will be appreciated that the above-described embodiments are merely examples and should not be construed to narrow the scope or spirit of the disclosure in any way. It will be appreciated that the scope of the disclosure encompasses many potential embodiments in addition to those here summarized, some of which are further explained within the following detailed description and its accompanying drawings.

### BRIEF DESCRIPTION OF THE DRAWINGS

Having thus described certain example embodiments of the present disclosure in general terms, reference will hereinafter be made to the accompanying drawings, which are not necessarily drawn to scale, and wherein:
FIG. 1 illustrates a block diagram of a self-charging battery in accordance with an example embodiment of the present disclosure;
FIG. 2 illustrates an architectural view of the self-charging battery connected with a mobile terminal having a wireless charging capability in accordance with an example embodiment of the present disclosure;
FIG. 3 illustrates the architectural view of the self-charging battery connected with the mobile terminal that does not have the wireless charging capability in accordance with an example embodiment of the present disclosure;
FIG. 4 illustrates a circuit diagram of a comparator circuitry of the self-charging battery in accordance with an example embodiment of the present disclosure;
FIG. 5 illustrates a flowchart showing a method of the self-charging battery in accordance with an example embodiment of the present disclosure; and
FIG. 6 illustrates another flowchart showing a method of the self-charging battery in accordance with an example embodiment of the present disclosure.

### DETAILED DESCRIPTION

Some embodiments will now be described more fully hereinafter with reference to the accompanying drawings, in which some, but not all, embodiments of the present disclosure are shown. Indeed, various embodiments may be embodied in many different forms and should not be construed as limited to the embodiments set forth herein; rather, these embodiments are provided so that this disclosure will satisfy applicable legal requirements.

The components illustrated in the figures represent components that may or may not be present in various embodiments of the present disclosure described herein such that embodiments may include fewer or more components than those shown in the figures while not departing from the scope of the present disclosure. Some components may be omitted from one or more figures or shown in dashed line for visibility of the underlying components.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in various embodiments," "in one embodiment," "according to one embodiment," "in some embodiments," and the like generally mean that the particular feature, structure, or characteristic following the phrase may be included in at least one embodiment of the present disclosure and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments or it may be excluded.

The present disclosure provides various embodiments of a self-charging battery. Embodiments may comprise a battery charging module that is configured to manage charging of the self-charging battery. Embodiments may comprise at least one processor that may be coupled to the battery charging module. Embodiments may be adapted to determine whether a mobile terminal has a wireless charging capability. Embodiments may be configured to disable or enable the battery charging module based on the determination of whether the mobile terminal has wireless charging capability.

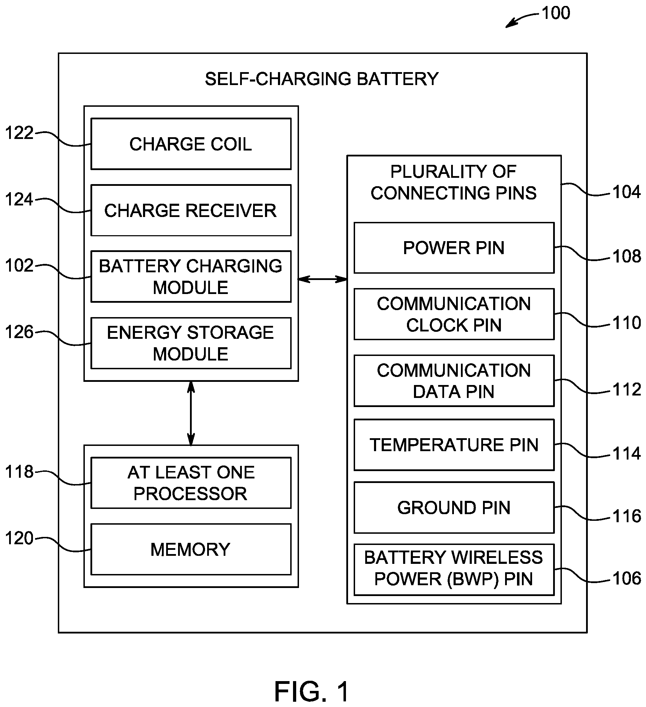

FIG. 1 illustrates a block diagram of a self-charging battery 100, in accordance with an example embodiment of the present disclosure.

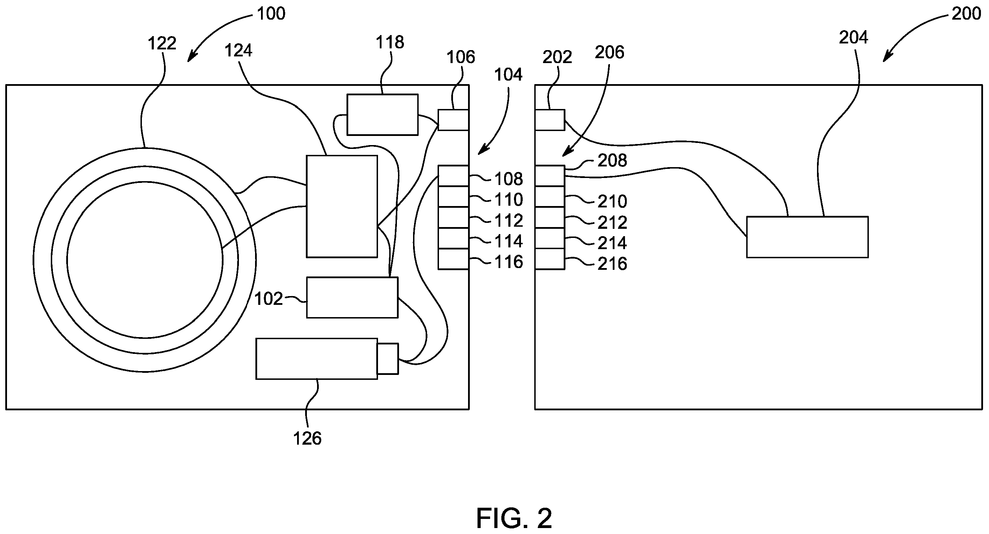

In some embodiments, the self-charging battery 100 may comprise a battery charging module 102 and a plurality of connecting pins 104. In some embodiments, the self-charging battery 100 may be configured to store electrical energy. Further, the self-charging battery 100 may be configured to be connected with a mobile terminal 200 (FIG. 2). In some embodiments, the self-charging battery 100 may be configured to provide a selectively connectable power source to the mobile terminal 200. In some embodiments, the self-charging battery 100 may be configured to facilitate the mobile terminal 200 to operate independently of a direct electrical outlet. In some embodiments, the self-charging battery 100 may be selected based at least on high energy density, lightweight properties, and long cycle life.

In some embodiments, when the mobile terminal 200 is in use, the self-charging battery 100 may discharge by allowing electrons to flow from an anode of the self-charging battery 100 to a cathode of the self-charging battery 100. Such flow of electrons may be configured to provide the electrical energy to power the mobile terminal 200. In one example, the self-charging battery 100 may be manually plugged-in by a user inside the mobile terminal 200. In another example, the self-charging battery 100 may be configured to provide an electrical output having one or more electrical parameters. Further, the one or more electrical parameters may comprise voltage (e.g., 3.5 volts to 4.5 volts), capacity (e.g., 1500 mAh to 5000 mAh), temperature range (e.g. -20°C to 45°C), etc.

In some embodiments, the mobile terminal 200 may be employed in various industrial applications. The industrial applications may comprise at least one of logistics, warehousing, manufacturing, and other field services. In one example, the mobile terminal 200 may comprise at least one of a mobile device, a communication device, or a handheld device. In some embodiments, the mobile terminal 200 may be employed to perform one or more operations. Further, the one or more operations may include at least one of a barcode scanning, wireless communication, and data collection. In some embodiments, the mobile terminal 200 may comprise various components. Further, the components of the mobile terminal 200 may comprise a control unit (not shown). Further, the control unit may ensure a smooth operation of various applications such as inventory management, asset tracking, etc. In some embodiments, the mobile terminal 200 may be encased within a housing (not shown). In some embodiments, the housing of the mobile terminal 200 may be configured to protect the mobile terminal 200 from various hazards that may harm the mobile terminal 200 within an industrial environment. The hazards may include, but are not limited to, a sudden drop from a height, collision with machineries, or exposure to chemicals.

In some embodiments, the mobile terminal 200 may comprise at least two types of mobile terminals. Further, the first type of mobile terminal 200 may correspond to the mobile terminal 200 having a wireless charging capability. Further, the second type of mobile terminal 200 may correspond to the mobile terminal 200 that does not have the wireless charging capability. In some embodiments, when the self-charging battery 100 is plugged-into the mobile terminal 200, the mobile terminal 200 may be configured to generate a signal. In one example, the signal may correspond to the wireless charging capability of the mobile terminal 200. In another example, the signal may correspond to a wireless charging incapability of the mobile terminal 200.

In some embodiments, the self-charging battery 100 may comprise the plurality of connecting pins 104. In some embodiments, the plurality of connecting pins 104 may be configured to serve as a medium that facilitates transfer of electrical energy and signals (e.g., control, communications, etc.) from the self-charging battery 100 to the mobile terminal 200. Further, upon receiving the electrical energy, the mobile terminal 200 may perform the one or more operations (e.g., data receiving, data processing, information displaying, etc.). In some embodiments, each pin of the plurality of connecting pins 104 are made from various electrically conducting materials. The materials may be selected to ensure an optimum transfer of an electrical energy from the self-charging battery 100 to the mobile terminal 200. In some embodiments, the plurality of connecting pins 104 may comprise a battery wireless power (BWP) pin 106, power pin 108, communication clock pin 110, communication data pin 112, temperature pin 114, and ground pin 116.

In some embodiments, the self-charging battery 100 may comprise at least one processor 118. In some embodiments, the at least one processor 118 may be coupled with the plurality of connecting pins 104. In some embodiments, the at least one processor 118 may include suitable logic, circuitry, and/or interfaces that are operable to execute one or more instructions stored in a memory 120 to perform predetermined operations. In one embodiment, the at least one processor 118 may be configured to decode the one or more instructions and execute the one or more instructions that are stored within the memory 120. The at least one processor 118 may be configured to execute one or more computer-readable program instructions, such as program instructions to carry out any of the functions described in this description. Further, the at least one processor 118 may be implemented using one or more processor technologies known in the art such as central processing unit (CPU), field-programmable gate array (FPGA), digital signal processors (DSP), etc. Examples of the at least one processor 118 may comprise at least one of, one or more general purpose processors and/or one or more special purpose processors that may be designed to handle the self-charging battery 100.

In some embodiments, the memory 120 may be configured to store the one or more datasets associated with the data received by the plurality of connecting pins 104 of the self-charging battery 100. It is apparent to a person with ordinary skill in the art that the one or more instructions stored in the memory 120 enable the hardware of the self-charging battery 100 to perform the predetermined operations. Some of the commonly known memory implementations include, but are not limited to, fixed (hard) drives, magnetic tape, floppy diskettes, optical disks, Compact Disc Read-Only Memories (CD-ROMs), and magneto-optical disks, semiconductor memories, such as ROMs, Random Access Memories (RAMs), Programmable Read-Only Memories (PROMs), Erasable PROMs (EPROMs), Electrically Erasable PROMs (EEPROMs), flash memory, magnetic or optical cards, or other type of media/machine-readable medium suitable for storing electronic instructions.

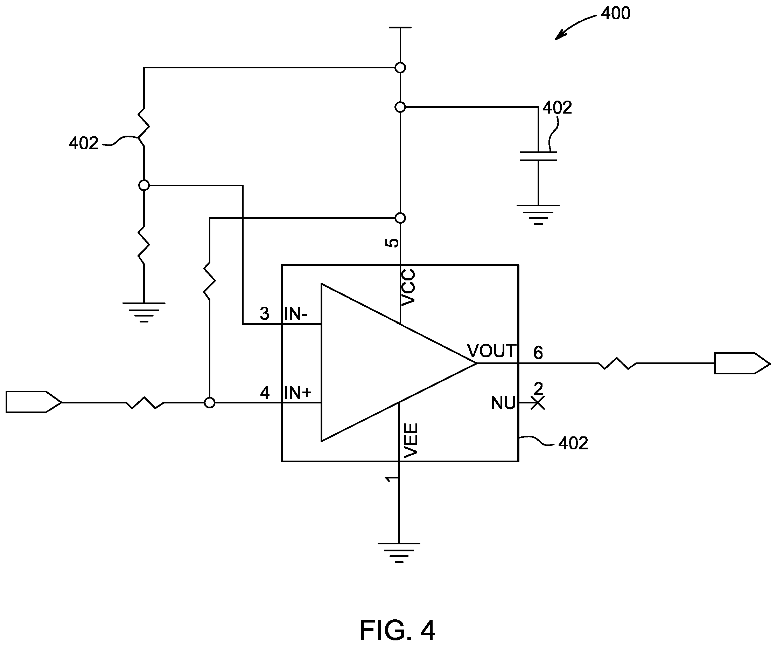

In some embodiments, the at least one processor 118 may be configured to determine whether the mobile terminal 200 that may be plugged-in with the self-charging battery 100 has the wireless charging capability. In one instance, the at least one processor 118 may be adapted to determine whether the mobile terminal 200 has the wireless charging capability by determining whether a mobile terminal wireless power (MTWP) pin 202 (FIG. 2) is present within the mobile terminal 200 and connected to the BWP pin 106 of the plurality of connecting pins 104 of the self-charging battery 100. In some embodiments, the at least one processor 118 may be adapted to determine presence of the MTWP pin 202 using a comparator circuitry 400 (FIG. 4). In some embodiments, the comparator circuitry 400 may comprise a plurality of electronic components 402 (FIG. 4). In some embodiments, the at least one processor 118 may be adapted to determine the signal received from the mobile terminal 200 is indicative of the wireless charging capability of the mobile terminal 200. In another embodiment, the at least one processor 118 may determine the mobile terminal 200 has the wireless charging capability by determining whether the MTWP pin 202 is present within the mobile terminal 200 and connected to the BWP pin 106 and the signal received from the mobile terminal 200 is indicative of the wireless charging capability of the mobile terminal 200.

In some embodiments, when the at least one processor 118 determines the MTWP pin 202 is not present within the mobile terminal 200 having the wireless charging capability, the at least one processor 118 may be configured to enable the battery charging module 102 of the self-charging battery 100. In some embodiments, when the signal received from the mobile terminal 200 is not indicative of the mobile terminal 200 having the wireless charging capability, the at least one processor 118 may be configured to enable the battery charging module 102 of the self-charging battery 100. In some embodiments, the battery charging module 102 may be configured to manage charging of the self-charging battery 100, when the self-charging battery 100 or the mobile terminal 200 comprising the self-charging battery 100 is placed over a wireless charging pad (not shown). In some embodiments, the wireless charging pad may be configured to generate an electromagnetic field upon receiving an electric power supply from a power source (not shown).

In some embodiments, the self-charging battery 100 may further comprise a charge coil 122 and a charge receiver 124. In some embodiments, the charge coil 122 may be configured to induce an electrical energy from the electromagnetic field generated by the wireless charging pad. In some embodiments, the charge coil 122 may be configured to convert the electromagnetic field into electrical energy. In some embodiments, the charge coil 122 may be configured to convert the electromagnetic field into electrical energy using electromagnetic induction. In some embodiments, the charge coil 122 may be composed of various materials. The materials may comprise at least one of a copper, aluminum, etc. In some embodiments, the charge coil 122 may be electrically coupled with the charge receiver 124. In some embodiments, the charge receiver 124 may comprise a plurality of electronic components (not shown) such as resistors, capacitors, inductors, etc.

In some embodiments, the charge receiver 124 may be configured to manage the electrical energy induced in the charge coil 122. In some embodiments, the charge receiver 124 may be configured to regulate the electrical energy received from the charge coil 122. In some embodiments, the charge receiver 124 may be configured to direct the electrical energy towards the battery charging module 102. In some embodiments, the charge receiver 124 of the self-charging battery 100 may be configured to perform one or more operations. Further, the one or more operations may comprise rectification of the received electrical energy from alternating current (AC) to direct current (DC) for charging the self-charging battery 100, managing voltage levels, and ensuring efficient power transfer from the charge coil 122 to the battery charging module 102. In some embodiments, the charge coil 122 and the charge receiver 124 may be connected with the battery charging module 102 to wirelessly charge the self-charging battery 100.

In some embodiments, the battery charging module 102 of the self-charging battery 100 may be configured to efficiently and safely store electrical energy in the self-charging battery 100. In some embodiments, once the charge receiver 124 transfers the electrical energy from the charge coil 122, the battery charging module 102 may manage the electrical energy and ensure the self-charging battery 100 is charged optimally. In some embodiments, the battery charging module 102 may be configured to perform one or more operations. Further, the one or more operations may comprise overcharge protection, short-circuit protection, and intelligent charging. In some embodiments, the overcharge protection operation may facilitate the battery charging module 102 to prevent the self-charging battery 100 from being charged beyond its maximum capacity.

Further, the overcharge protection operation may also facilitate the battery charging module 102 to reduce a risk of overheating of the self-charging battery 100, swelling of the self-charging battery 100, or explosion of the self-charging battery 100 due to high temperature. In some embodiments, the battery charging module 102 may comprise one or more sensors (not shown) such as temperature sensor, voltage sensor, current sensor, etc. In some embodiments, the one or more sensors of the battery charging module 102 may ensure the charging of the self-charging battery 100 within safe limits. In some embodiments, the short-circuit protection operation of the self-charging battery 100 may be configured to ensure an accidental short-circuit may not cause any damage to the self-charging battery 100.

In some embodiments, the intelligent charging operation may facilitate the battery charging module 102 to enhance charging efficiency of the self-charging battery 100. In some embodiments, during the intelligent charging operation, the battery charging module 102 may slowly charge the self-charging battery 100 by providing a constant flow of electrical energy. In some embodiments, the self-charging battery 100 may comprise an energy storage module 126. In some embodiments, the energy storage module 126 may be configured to store the electrical energy in a form of electric charge. In some embodiments, the energy storage module 126 may correspond to at least one of a lithium-ion (Li-ion) battery or lithium-polymer (Li-Po) battery. In some embodiments, the energy storage module 126 may comprise one or more battery cells (not shown) that may be configured to store the electrical energy. In some embodiments, the one or more battery cells may comprise electrodes (not shown) and an electrolyte (not shown) that may facilitate storage of the electrical energy. In some embodiments, upon complete charging of the self-charging battery 100, the battery charging module 102 may be configured to transfer the electrical energy stored into the self-charging battery 100 to the mobile terminal 200 via the plurality of connecting pins 104.

In another embodiment, when the at least one processor 118 determines the MTWP pin 202 is present within the mobile terminal 200, the at least one processor 118 may be configured to disable the battery charging module 102 of the self-charging battery 100. In another embodiment, when the signal received from the mobile terminal 200 is indicative of the wireless charging capability of the mobile terminal 200, the at least one processor 118 may be configured to disable the battery charging module 102 of the self-charging battery 100. In various examples, the mobile terminal 200 may send a signal to disable the battery charging module 102 of the self-charging battery 100. Further, upon disabling the battery charging module 102, the at least one processor 118 may be adapted to send a signal to the mobile terminal 200 to enable a battery charging module 204 (FIG. 2) of the mobile terminal 200. Further, the battery charging module 204 of the mobile terminal 200 may be configured to wirelessly charge the self-charging battery 100, when plugged-into the mobile terminal 200. In some embodiments, the mobile terminal 200 may comprise a charge coil (not shown) and a charge receiver (not shown). Further, the charge coil and the charge receiver of the mobile terminal 200 may be configured to draw an electrical energy from the wireless charging pad. In some embodiments, the battery charging module 204 of the mobile terminal 200 may be configured to receive the electrical energy from the charge coil and the charge receiver. Further, the battery charging module 204 may be configured to charge the self-charging battery 100 through the plurality of connecting pins 104.

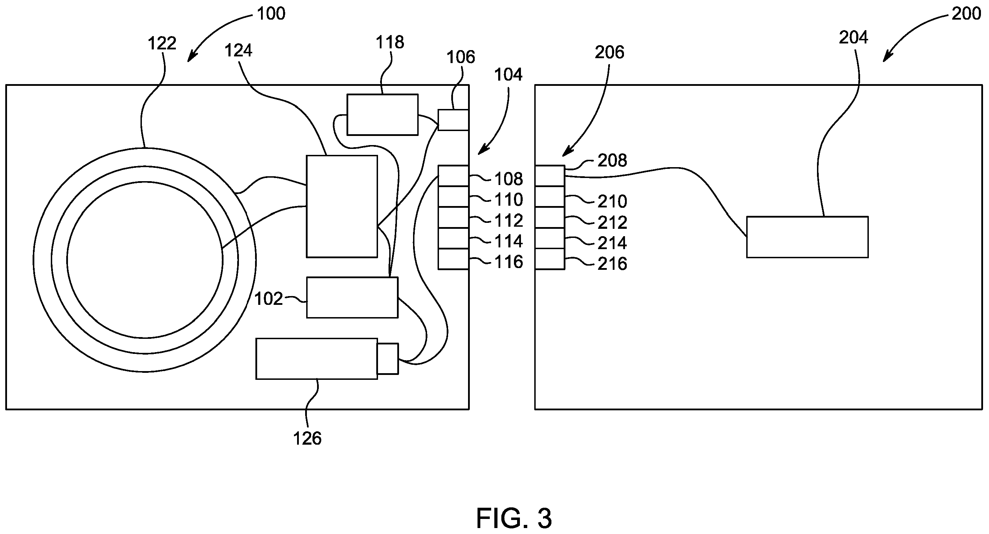

FIG. 2 illustrates an architectural view of the self-charging battery 100 connected with the mobile terminal 200 having the wireless charging capability, in accordance with an example embodiment of the present disclosure. FIG. 3 illustrates the architectural view of the self-charging battery 100 connected with the mobile terminal 200 that does not have the wireless charging capability, in accordance with an example embodiment of the present disclosure. FIG. 4 illustrates a circuit diagram of the comparator circuitry 400 of the self-charging battery 100, in accordance with an example embodiment of the present disclosure.

In some embodiments, the self-charging battery 100 may connect with the mobile terminal 200 through the plurality of connecting pins 104. Further, the self-charging battery 100 may comprise the charge coil 122, the charge receiver 124, the battery charging module 102, the plurality of connecting pins 104, and the at least one processor 118. Further, when the self-charging battery 100 is connected with the mobile terminal 200 and the mobile terminal 200 is placed over the wireless charging pad, the battery charging module 204 of the mobile terminal 200 may be configured to charge the self-charging battery 100. In some embodiments, the mobile terminal 200 may further comprise a plurality of connecting pins 206. Further, the plurality of connecting pins 206 of the mobile terminal 200 may comprise the MTWP pin 202, a power pin 208, a communication clock pin 210, a communication data pin 212, a temperature pin 214, and/or a ground pin 216. In some embodiments, each pin of the plurality of connecting pins 104 of the self-charging battery 100 is connected with a corresponding pin of the plurality of connecting pins 206 of the mobile terminal 200. In some embodiments, the temperature pin 214 of the mobile terminal 200 may be configured to communicate a temperature of the self-charging battery 100. Further, the temperature pin 214 of the mobile terminal 200 may be adapted to determine a connection of the self-charging battery 100 with the mobile terminal 200.

In various examples, the mobile terminal 200 may comprise a control unit (not shown). Further, the control unit may correspond to a processor that may control operations of the mobile terminal 200. In some embodiments, upon determining the connection of the self-charging battery 100 with the mobile terminal 200, the control unit may be configured to generate a signal. Further, the signal generated by the control unit may correspond to the wireless charging capability of the mobile terminal 200. In some embodiments, upon plugging of the self-charging battery 100 into the mobile terminal 200, the plurality of connecting pins 104 of the self-charging battery 100 may be adapted to selectively connect with the plurality of connecting pins 206 of the mobile terminal 200.

In some embodiments, the plurality of connecting pins 104 of the self-charging battery 100 may comprise the battery wireless power (BWP) pin 106, power pin 108, communication clock pin 110, communication data pin 112, temperature pin 114, and ground pin 116. In some embodiments, the power pin 108 of the self-charging battery 100 may be configured to connect with the power pin 208 of the mobile terminal 200. In some embodiments, the power pin 108 of the self-charging battery 100 may be configured to supply necessary electrical energy from the self-charging battery 100 to the mobile terminal 200. In some embodiments, the power pin 108 of the self-charging battery 100 may ensure a proper power delivery and maintain a proper connection between the self-charging battery 100 and the mobile terminal 200. In some embodiments, the communication clock pin 110 of the self-charging battery 100 may be configured to connect with the communication clock pin 210 of the mobile terminal 200. In some embodiments, the communication clock pin 110 of the self-charging battery 100 may be configured to synchronize data transfer between the self-charging battery 100 and the mobile terminal 200. In some embodiments, the communication clock pin 110 of the self-charging battery 100 may be configured to communicate a clock signal that coordinates timing of data exchanges between the self-charging battery 100 and the mobile terminal 200.

In some embodiments, the communication data pin 112 of the self-charging battery 100 may be configured to connect with the communication data pin 212 of the mobile terminal 200. In some embodiments, the communication data pin 112 of the self-charging battery 100 may be configured to facilitate an exchange of data between the self-charging battery 100 and the mobile terminal 200. Further, the communication data pin 112 of the self-charging battery 100 and the communication data pin 212 of the mobile terminal 200 may carry information such as battery status, charge levels, and other relevant parameters. In some embodiments, the communication data pin 212 may allow the mobile terminal 200 to monitor and respond to conditions of the self-charging battery 100. In some embodiments, the ground pin 116 of the self-charging battery 100 may be configured to connect with the ground pin 216 of the mobile terminal 200. Further, the ground pin 116 of the self-charging battery 100 may be configured to provide a common electrical return path for the electrical energy flowing through the self-charging battery 100 and the mobile terminal 200.

As illustrated in FIG. 2, the BWP pin 106 of the self-charging battery 100 may be configured to connect with the MTWP pin 202 of the mobile terminal 200. In some embodiments, the plurality of connecting pins 104 of the self-charging battery 100 may be coupled to the at least one processor 118. In some embodiments, the at least one processor 118 may be configured to determine whether the mobile terminal 200 has the wireless charging capability. In some embodiments, the at least one processor 118 may determine the mobile terminal 200 has the wireless charging capability by determining whether the MTWP pin 202 is present within the mobile terminal 200 and connected to the BWP pin 106. Herein, the MTWP pin 202 is present in the mobile terminal 200. In some embodiments, the at least one processor 118 may determine the mobile terminal 200 has the wireless charging capability by determining that the signal received from the mobile terminal 200 is indicative of the wireless charging capability of the mobile terminal 200. In another embodiment, the at least one processor 118 may determine the mobile terminal 200 has the wireless charging capability by determining whether the MTWP pin 202 is present within the mobile terminal 200 and connected to the BWP pin 106 and the signal received from the mobile terminal 200 is indicative of the wireless charging capability of the mobile terminal 200. Further, the at least one processor 118 may be configured to disable the battery charging module 102 of the self-charging battery 100. In various examples, the battery charging module 204 of the mobile terminal 200 may be kept disabled. Further, upon disabling the battery charging module 102 of the self-charging battery 100, the at least one processor 118 may be adapted to send the signal to the mobile terminal 200 to enable the battery charging module 204 of the mobile terminal 200. In some embodiments, the battery charging module 204 of the mobile terminal 200 may be enabled based at least on firmware versions. For example, if the at least one processor 118 may determine that a firmware version of the battery charging module 102 of the self-charging battery 100 is latest in comparison to a firmware version of the mobile terminal 200, then the at least one processor 118 may enable the battery charging module 102 of the self-charging battery 100. Further, in another example, if the at least one processor 118 may determine that the firmware version of the battery charging module 102 of the self-charging battery 100 is older in comparison to the firmware version of the mobile terminal 200, then the at least one processor 118 may disable the battery charging module 102 of the self-charging battery 100 and enable the battery charging module 204 of the mobile terminal 200. In various examples, enabling of the battery charging module 204 of the mobile terminal 200 may depend upon predetermined priority. For example, if a higher priority is assigned to the battery charging module 102 of the self-charging battery 100, then the battery charging module 102 of the self-charging battery 100 is enabled while the battery charging module 204 of the mobile terminal 200 is disabled. In another example, if a higher priority is assigned to the battery charging module 204 of the mobile terminal 200, then the battery charging module 102 of the self-charging battery 100 is disabled while the battery charging module 204 of the mobile terminal 200 is enabled. Further, to this end, priority data is shared amongst the at least one processor 118 of the self-charging battery 100 and the control unit of the mobile terminal 200 during handshaking between the self-charging battery 100 and the mobile terminal 200.

As illustrated in FIG. 3, the MTWP pin 202 is not present in the mobile terminal 200, the BWP pin 106 of the self-charging battery 100 may be configured to remain free when the self-charging battery 100 may be connected with the mobile terminal 200. In some embodiments, the plurality of connecting pins 104 of the self-charging battery 100 may be coupled to the at least one processor 118. In some embodiments, the at least one processor 118 may be adapted to determine whether the MTWP pin 202 is present within the mobile terminal 200 and connected to the BWP pin 106. In some embodiments, the at least one processor 118 may be configured to determine the presence of the MTWP pin 202 using the comparator circuitry 400 (as illustrated in FIG. 4). The comparator circuitry 400 may comprise at least one input terminal and at least one output terminal. Further, the input terminal of the comparator circuitry 400 may be connected with the BWP pin 106 of the self-charging battery 100 and the output terminal of the comparator circuitry 400 may be connected with the MTWP pin 202. Further, the comparator circuitry 400 may be configured to detect an electronic load on the output terminal when the MTWP pin 202 of the mobile terminal is present. In various examples, the comparator circuitry 400 gets activated (e.g., the comparator circuitry asserts), when the MTWP pin 202 is present and gets deactivated (e.g., the comparator circuitry de-asserts), when the MTWP pin 202 is not present.

In some embodiments, the at least one processor 118 may be adapted to determine whether the signal received from the mobile terminal 200 is indicative of the wireless charging capability of the mobile terminal 200. In some embodiments, when the MTWP pin 202 is not present in the mobile terminal 200, the at least one processor 118 may be configured to enable the battery charging module 102 of the self-charging battery 100. In some embodiments, when the signal received from the mobile terminal 200 is not indicative of the wireless charging capability of the mobile terminal 200, then the at least one processor 118 may be configured to enable the battery charging module 102 of the self-charging battery 100. In another embodiment, upon enabling the battery charging module 102, the at least one processor 118 may be adapted to send the signal to the mobile terminal 200 to disable the battery charging module 204 of the mobile terminal 200.

In some embodiments, the self-charging battery 100 may further comprise the charge coil 122 and the charge receiver 124. In some embodiments, the charge coil 122 may be configured induce an electrical energy from the electromagnetic field generated by the wireless charging pad. In some embodiments, the charge coil 122 may be electrically coupled with the charge receiver 124. In some embodiments, the charge receiver 124 may be configured to manage the electrical energy induced in the charge coil 122. In some embodiments, the charge receiver 124 may be configured to regulate the electrical energy received from the charge coil 122. In some embodiments, the charge receiver 124 may be configured to direct the electrical energy towards the battery charging module 102. In some embodiments, the charge coil 122 and the charge receiver 124 may be connected with the battery charging module 102 to wirelessly charge the self-charging battery 100. In some embodiments, the self-charging battery 100 may comprise the energy storage module 126. In some embodiments, the energy storage module 126 may be configured to store the electrical energy in a form of electric charge.

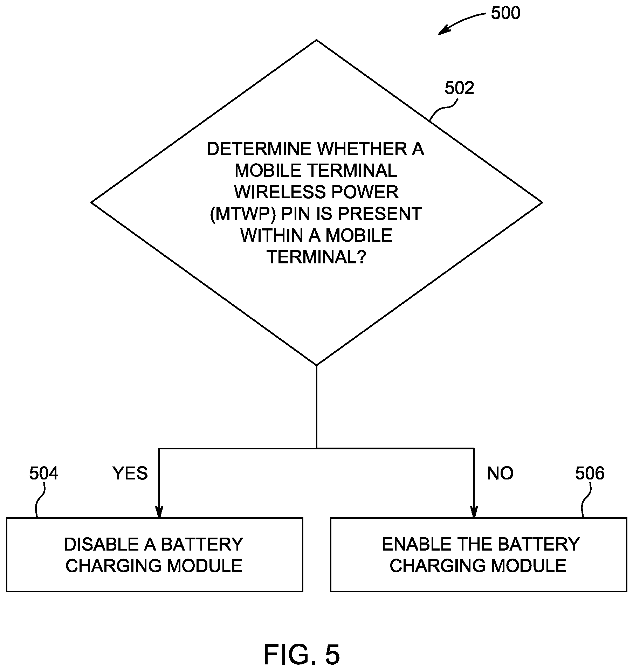

FIG. 5 illustrates a flowchart showing a method 500 of the self-charging battery 100, in accordance with an example embodiment of the present disclosure.

At operation 502, the at least one processor 118 that may be coupled to the battery charging module 102 of the self-charging battery 100, may be configured to determine whether the mobile terminal 200 has the wireless charging capability, upon plugging-in of the self-charging battery 100 within the mobile terminal 200. In some embodiments, the at least one processor 118 may be adapted to determine the mobile terminal 200 has the wireless charging capability by determining whether the MTWP pin 202 is present within the mobile terminal 200. In some embodiments, the mobile terminal 200 may comprise at least one of the mobile device, the communication device, or the handheld computer. In some embodiments, the self-charging battery 100 may further comprise the battery charging module 102 and the plurality of connecting pins 104. In some embodiments, the plurality of connecting pins 104 may be adapted to selectively connect the self-charging battery 100 with the mobile terminal 200. Further, the plurality of connecting pins 104 may comprise the BWP pin 106.

For example, a self-charging battery 100 is connected with a mobile terminal 200. The self-charging battery 100 comprises at least one processor 118, a battery charging module 102, a charge coil 122, and a charge receiver 124. The self-charging battery 100 further comprises a plurality of connecting pins 104 that gets connected with a plurality of connecting pins 206 of the mobile terminal 200. The at least one processor 118 is adapted to determine whether a mobile terminal wireless power (MTWP) pin 202 is present within the mobile terminal 200.

At operation 504, the at least one processor 118 may be configured to disable the battery charging module 102 upon determining the MTWP pin 202 is present within the mobile terminal 200 In another embodiment, upon disabling the battery charging module 102, the at least one processor 118 may be adapted to send the signal to the mobile terminal 200 to enable the battery charging module 204 of the mobile terminal 200 to manage charging of the self-charging battery 100. In various examples, the mobile terminal 200 may also be configured to disable or enable the battery charging module 102 of the self-charging battery 100. Further, the signal may correspond to the command signal for disabling the battery charging module 102.

For example, the at least one processor 118 is configured to disable the battery charging module 102 upon determining the MTWP pin 202 is present within the mobile terminal 200.

At operation 506, the at least one processor 118 may be configured to enable the battery charging module 102 upon determining the MTWP pin 202 is not present within the mobile terminal 200. In some embodiments, upon enabling the battery charging module 102, the at least one processor 118 may be adapted to send the signal to the mobile terminal 200 to disable the battery charging module 204 of the mobile terminal 200. Further, the signal may correspond to the command signal for enabling the battery charging module 102. In various examples, the mobile terminal 200 may also be configured to disable or enable the battery charging module 102 of the self-charging battery 100.

For example, the at least one processor 118 is configured to enable the battery charging module 102 upon determining the MTWP pin 202 is not present within the mobile terminal 200.

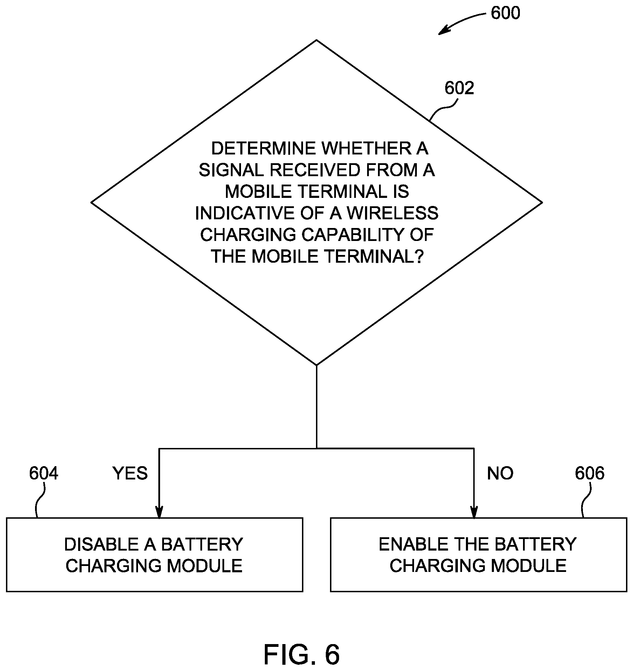

FIG. 6 illustrates another flowchart showing a method 600 of the self-charging battery 100, in accordance with an example embodiment of the present disclosure.

At operation 602, the at least one processor 118 may be configured to determine whether the mobile terminal 200 has the wireless charging capability, upon plugging-in of the self-charging battery 100 within the mobile terminal 200. In some embodiments, the at least one processor 118 may be adapted to determine the mobile terminal 200 has the wireless charging capability by determining whether the signal received from the mobile terminal 200 is indicative of the wireless charging capability of the mobile terminal 200. In another embodiment, the at least one processor 118 may determine the mobile terminal 200 has the wireless charging capability by determining whether the MTWP pin 202 is present within the mobile terminal 200 and connected to the BWP pin 106 and the signal received from the mobile terminal 200 is indicative of the wireless charging capability of the mobile terminal 200.

For example, the at least one processor 118 is adapted to determine whether a signal received from the mobile terminal 200 is indicative of the wireless charging capability of the mobile terminal 200.

At operation 604, the at least one processor 118 may be configured to disable the battery charging module 102 upon determining the signal received from the mobile terminal 200 is indicative of the wireless charging capability of the mobile terminal 200. Further, upon disabling the battery charging module 102, the at least one processor 118 may be adapted to send the signal to the mobile terminal 200 to enable the battery charging module 204 of the mobile terminal 200 to wirelessly charge the self-charging battery 100. In various examples, the mobile terminal 200 may also be configured to disable or enable the battery charging module 102 of the self-charging battery 100. Further, the signal may correspond to the command signal for disabling the battery charging module 102.

For example, the at least one processor 118 is configured to disable the battery charging module 102 upon determining the signal received from the mobile terminal 200 is indicative of the wireless charging capability of the mobile terminal 200.

At operation 606, the at least one processor 118 may be configured to enable the battery charging module 102 upon determining the signal received from the mobile terminal 200 is not indicative of the wireless charging capability of the mobile terminal 200. In some embodiments, upon enabling the battery charging module 102, the at least one processor 118 may be adapted to send the signal to the mobile terminal 200 to disable the battery charging module 204 of the mobile terminal 200.

For example, the at least one processor 118 is configured to enable the battery charging module 102 upon determining the signal received from the mobile terminal 200 is not indicative of the wireless charging capability of the mobile terminal 200.

The present disclosure streamlines a wireless charging process of the self-charging battery 100. Embodiments of the present invention may facilitate wireless charging of the self-charging battery 100 when plugged-into the mobile terminal 200. Embodiments of the present invention may enable the self-charging battery 100 to charge directly through the wireless charging pad. Embodiments of the present invention may determine a wireless charging capability of the mobile terminal 200 using the plurality of connecting pins 104. Embodiments of the present invention may enable or disable charging of the self-charging battery 100 through the battery charging module 102.

Many modifications and other embodiments of the disclosure set forth herein will come to mind to one skilled in the art to which the present disclosure pertains having the benefit of the teachings presented in the foregoing descriptions and the associated drawings. Therefore, it is to be understood that the present disclosure is not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A self-charging battery comprising:
a battery charging module configured to manage charging of the self-charging battery; and
at least one processor coupled to the battery charging module, wherein the at least one processor is:
adapted to determine whether a mobile terminal has a wireless charging capability; and
configured to disable or enable the battery charging module based on the determination of whether the mobile terminal has wireless charging capability.

2. The self-charging battery of claim 1, wherein the self-charging battery further comprises a plurality of connecting pins coupled to the battery charging module and adapted to selectively connect the self-charging battery with the mobile terminal, the plurality of connecting pins comprising at least a battery wireless power (BWP) pin.

3. The self-charging battery of claim 2, wherein the at least one processor determines whether the mobile terminal has the wireless charging capability by determining whether a mobile terminal wireless power (MTWP) pin is present within the mobile terminal and connected to the BWP pin or a signal received from the mobile terminal is indicative of the wireless charging capability of the mobile terminal.

4. The self-charging battery of claim 3, wherein the at least one processor is configured to disable the battery charging module upon determining the MTWP pin is present within the mobile terminal or the signal received from the mobile terminal is indicative of the wireless charging capability of the mobile terminal, or to enable the battery charging module upon determining the MTWP pin is not present within the mobile terminal or the signal received from the mobile terminal is not indicative of the wireless charging capability of the mobile terminal.

5. The self-charging battery of claim 3, wherein the signal received from the mobile terminal corresponds to a command signal for disabling or enabling the battery charging module.

6. The self-charging battery of claim 2, wherein the plurality of connecting pins further comprise a power pin, a communication clock pin, a communication data pin, a temperature pin, and/or a ground pin.

7. The self-charging battery of claim 6, wherein the temperature pin is configured to communicate a temperature of the self-charging battery and adapted to determine a connection of the self-charging battery with the mobile terminal.

8. The self-charging battery of claim 1, wherein the self-charging battery further comprises a charge coil and a charge receiver, and wherein the charge coil and the charge receiver are connected with the battery charging module to wirelessly charge the self-charging battery.

9. The self-charging battery of claim 1, wherein upon disabling the battery charging module, the at least one processor is adapted to send a signal to the mobile terminal to enable a battery charging module of the mobile terminal to wirelessly charge the self-charging battery.

10. A method comprising:
determining, via at least one processor coupled to a battery charging module of a self-charging battery, whether a mobile terminal has a wireless charging capability; and
disabling or enabling, via the at least one processor, a battery charging module based on the determination of whether the mobile terminal has wireless charging capability,
wherein the battery charging module is configured to manage charging of the self-charging battery.

11. The method of claim 10, further comprising selectively connecting, via a plurality of connecting pins coupled to the battery charging module, the self-charging battery with the mobile terminal, wherein the plurality of connecting pins comprises at least a battery wireless power (BWP) pin.

12. The method of claim 11, wherein determining, via the at least one processor, whether the mobile terminal has the wireless charging capability by determining whether a mobile terminal wireless power (MTWP) pin is present within the mobile terminal and connected to the BWP pin or a signal received from the mobile terminal is indicative of the wireless charging capability of the mobile terminal.

13. The method of claim 12, further comprising disabling, via the at least one processor, the battery charging module upon determining the MTWP pin is present within the mobile terminal or the signal received from the mobile terminal is indicative of the wireless charging capability of the mobile terminal, or enabling, via the at least one processor, the battery charging module upon determining the MTWP pin is not present within the mobile terminal or the signal received from the mobile terminal is not indicative of the wireless charging capability of the mobile terminal.

14. The method of claim 13, further comprising communicating, via a temperature pin, a temperature of the self-charging battery, wherein the temperature pin is adapted to determine a connection of the self-charging battery with the mobile terminal.

15. The method of claim 10, further comprising sending, via the at least one processor, a signal to the mobile terminal to enable a battery charging module of the mobile terminal to wirelessly charge the self-charging battery, upon disabling the battery charging module.
